# EUROPEAN PATENT APPLICATION

(11) **EP 4 671 216 A1**
(43) Date of publication of application: **31.12.2025**
(21) Application number: 24185106.2
(22) Date of filing: 27.06.2024
(51) Int. Cl.: C02F 1/32, C02F 1/78, C02F 1/20, C02F 1/72

(54) **ADVANCED OXIDATION PROCESS FOR WATER TREATMENT**

(71) Applicant: Xylem Europe GmbH, 8200 Schaffhausen (CH)
(72) Inventor: SPERLE, Philipp Julius, 81549 München (DE); RIED, Achim, 32549 Bad Oeynhausen (DE)
(74) Representative: Lenzing Gerber Stute

(57) **Abstract**

A process for the treatment of water, in particular for the treatment of waste water, in a treatment system having an inlet and an outlet, comprising the introduction of ozone into the water to be treated and the UV irradiation of the ozonated water within a reaction chamber, wherein hydrogen peroxide is produced by the UV irradiation of the ozonated water in the reaction chamber and wherein the amount of ozone used for the water treatment and/or at least one irradiation-related parameter of the UV irradiation are adjusted such that the treated water after the UV irradiation at the outlet of the treatment system contains
i) hydrogen peroxide dissolved in the water in a mass ratio of hydrogen peroxide to introduced ozone in a range from 0.01 to 1.0, preferably in a range from 0.01 to 0.5, and
ii) ozone dissolved in the water in a maximum amount of ≤ 0.1 mg/l.

## Description

The invention relates to a process for the treatment of water, in particular of wastewater.

The pollution of water resources due to environmental contaminants and the discharge of wastewater, particularly industrial wastewater, has been a serious problem for many years. For this reason, considerable efforts have been made in the past to develop systems that remove pollutants from water and ensure high water quality or at least highly improved water quality. However, water often contains persistent pollutants mainly organic in nature such as pesticides, biocides, dyes, and pharmaceuticals, which are difficult to decompose. Simultaneously, legal requirements for the removal of these pollutants are becoming increasingly stringent.

It is known that water containing pollutants that are difficult to remove can be treated with advanced oxidation processes (AOPs). AOPs are designed to oxidize organic substances in the water using various combinations of ozone (O₃), hydrogen peroxide (H₂O₂) and UV irradiation (UV), such as O₃/UV, H₂O₂/UV, O₃/ H₂O₂ or O₃/ H₂O₂/UV, to produce highly reactive hydroxyl radicals (OH•). These radicals attach onto the organic substances and facilitate their oxidation with the effect that organic substances are destroyed.

US 2021/0078875 A1 discloses an AOP, wherein the process enables the treatment of feed water with Os/UV, O₃/H₂O₂ and H₂O₂/UV. O₃ and H₂O₂ are introduced into the water upstream of an UV reactor, with the UV irradiation being conducted within the UV reactor, which has a plurality of UV lamps with an optimized layout. Further AOPs are known from US 4,273,660 A and US 7,063,794 B2, both documents disclosing the use of O₃/UV for water treatment.

The known AOPs have some disadvantages, in particular when being used for water having a lower UV transmittance and higher bromide concentration such as e.g. wastewater treatment plant effluents or surface waters. H₂O₂/UV AOP, which is often used because radicals are formed with a high quantum yield and the process is relatively simple, has only small efficiency in low UV transmitting water since the molar extinction coefficient of H₂O₂ is low. The use of O₃ AOP is critical, since generally, bromide and O₃ lead to the formation of bromate which is considered to be carcinogenic. Thus, the use of O₃ in water with high bromide concentrations is limited, whereby too low a dose of O₃ may not degrade the pollutants sufficiently. H₂O₂ could be added to the O₃-AOP to reduce bromate formation. However, this would increase costs as the H₂O₂ dose is increased and a higher excess of H₂O₂ may need to be removed from the water at the end of the process.

Therefore, it is an object of the invention to provide an advanced oxidation process that is suitable to efficiently treat water having lower UV transmittance and/or higher bromide concentrations.

This object is solved by a process for the treatment of water, in particular for the treatment of wastewater, in a treatment system having an inlet for wastewater to be treated, a reaction chamber and an outlet for treated wastewater, comprising the introduction of ozone into the water to be treated and the UV irradiation of the ozonated water, wherein the UV irradiation takes place in the reaction chamber, wherein hydrogen peroxide is produced by the UV irradiation of the ozonated water in the reaction chamber and wherein the amount of ozone used for the water treatment and/or at least one irradiation-related parameter of the UV irradiation are adjusted such that the treated water after the UV irradiation at the outlet of the treatment system contains
i) hydrogen peroxide dissolved in the water in a mass ratio of hydrogen peroxide to introduced ozone in a range from 0.01 to 1, preferably in a range from 0.01 to 0.5, and
ii) ozone dissolved in the water in a maximum amount of ≤ 0.1 mg/l.

The term "water to be treated" here and in the following refers to the water that is or will be treated by the process according to the invention. It refers both to the water at the inlet of the treatment system, i.e. at the start of the process, and to the water before the end of the UV irradiation. If the term "treated water" is used here and in the following, it refers to the water that has been treated by the process according to the invention, after the end of the UV irradiation, irrespective of whether further process steps are conducted after the UV irradiation.

The term "reaction chamber" here and in the following refers to an area in which water to be treated is irradiated with UV light. For a batch process, this area may have a water in- and outlet through which water to be treated is fed into the area and UV irradiated water may be released. In a preferred alternative, the area may have an inlet for water to be treated and an outlet for UV irradiated water which is both suitable for a batch process as well as for a continuous process.

The term "outlet" here and in the following refers to the point at which the treated water leaves the treatment system and after which the last step of the process according to the invention is completed. The treated water at that point is referred to as effluent. The water may leave the treatment system directly when leaving the reaction chamber, i.e. after the UV irradiation. Preferably, the water may leave the treatment system after UV irradiation and after post-reactions of substances in the treated water, in particular O₃ and H₂O₂, in a post-reaction chamber and/or after degassing of the treated water in a degassing zone.

The terms "amount of O₃ used for the process", "used O₃", "amount of O₃ introduced into the water" and "introduced ozone" here and in the following are used synonymously and refers to the amount of O₃ deliberately added to the water treatment process.

When reference is made to the amount of O₃ or H₂O₂, this refers to the mass of O₃ or H₂O₂. The mass may be expressed in absolute terms or in relation to the water volume, preferably in the unit mg/l. However, it is essential that amounts or masses that are related to each other are calculated on the same basis, i.e. absolute or relative.

The amount of O₃ dissolved in water is measured according to DIN 38408-3:2011-04.

The amount of H₂O₂ dissolved in water is measured according to DIN 38409-15:1987-06.

The process according to the invention comprises the introduction of ozone into the water to be treated as well as the UV irradiation of the ozonated water. Os/UV AOP is often not considered, as the prevailing opinion is that such a process only forms radicals with a low quantum yield, is costly and carries the risk of bromate formation. However, it was surprisingly found that it is possible to effectively treat water, preferably wastewater with lower UV transmittance with Os/UV AOP in a cost-effective manner even at elevated bromide concentrations. This is possible by controlling the proportion of the so-called primary reactions and the so-called secondary reactions as well as the proportion of reactions within the secondary reactions.

The primary reactions comprise the instantaneous ozone demand of the water, i.e. the O₃ that is degraded immediately after being introduced into the water and that reacts directly with pollutants and/or organic substances in the water. The primary reactions also comprise the reaction of radicals produced photolytically, i.e. by UV irradiation, with pollutants and/or organic substances in the water. Irradiation of O₃ with UV light results in the splitting of O₃ into O₂ and a highly reactive O atom. The O atom reacts with water molecules leading to the formation of radicals. The primary reactions lead to the degradation of some of the substances and/or organic substances in the water. However, the UV irradiation of the O₃ also leads to the formation of H₂O₂ whenever the amount of O₃ introduced into the water and/or the at least one irradiation-related parameter are adjusted adequately. Both the radicals and H₂O₂ may be formed by the UV radiation of the O₃ already dissolved in the water as well as by the UV radiation of O₃ at the phase boundary of bubbles with which the O₃ may be introduced into the water.

The H₂O₂ formation resulting from the UV radiation of O₃ leads to secondary reactions. H₂O₂ reacts with at least some of the remaining O₃ in the water, thereby, again, forming radicals. The H₂O₂ is also split directly into radicals when it is irradiated with UV light. In the secondary reactions the H₂O₂ itself and the additional radicals formed from the H₂O₂ lead to further oxidation of organic substances in the water.

To control the proportion of primary reactions and secondary reactions as well as the proportion of the reactions within the secondary reactions, it needs to be ensured that a specific amount of H₂O₂ is formed by the UV irradiation of the O₃. It has been found that adjusting the amount of O₃ and/or at least one irradiation-related parameter, depending on the amount of dissolved H₂O₂ contained in the water at the outlet of the treatment system in relation to the introduced O₃, i.e. the mass ratio of H₂O₂ at the outlet of the treatment system to introduced O₃, it is possible to control the proportion of the primary and secondary reactions, whereby the mass ratio of the amount of H₂O₂ in the treated water at the outlet of the treatment system to introduced O₃ is indicative for the proportion of the primary and secondary reactions.

According to the invention, the mass ratio is in a range of 0.01 to 1.0, preferably in a range of 0.05 to 0.75, preferably in a range of 0.05 to 0.5. If the mass ratio is higher than 1.0, the degradation of the pollutants and/or organic substances may not be sufficient as the proportion of the secondary reactions is too low and/or the treated water has an excess of H₂O₂ that needs to be removed. If the mass ratio is lower than 0.01, a harmful amount of bromate may be formed as the proportion of primary reactions is too low to limit reaction of O₃ with Br⁻. For water to be treated containing bromide, a good balance between an effective degradation of pollutants and a limited formation of bromate may be achieved with a mass ratio between 0.2 and 0.5

A higher mass ratio of H₂O₂ in the effluent to introduced O₃ indicates that more H₂O₂ was formed in primary reactions, and that the secondary reaction was mainly driven by the UV irradiation of H₂O₂. This may be advantageous to minimize bromate formation as a higher mass ratio may be achieved through the rapid degradation of O₃ by UV irradiation. However, a higher mass ratio is associated with a higher energy consumption in the process. A lower mass ratio indicates a higher proportion of secondary reactions, which not only can be advantageous for the degradation of the pollutants and/or organic substances, since the proportion of the primary reactions is lower, but also requires less energy as less UV irradiation is applied.

The O₃ introduced into the water to be treated does not necessarily have to be introduced all at once or in a continuous introduction process. In one embodiment, the O₃ can be introduced into the water to be treated at two or more different locations within the treatment system or at different times so that the water to be treated may be exposed to the ozone two or more times with an intermediate time delay. Although not being necessary, it is preferred to introduce the ozone in proximity or at the light source(s) used for UV irradiation.

With the process according to the invention, the proportion of the primary and the secondary reactions is controlled, and the secondary reactions are systematically used. Therefore, it is possible to mainly or solely rely on the addition of O₃ to the water to be treated and/or the UV irradiation to be applied. The process is particularly suitable for the treatment of turbid water, i.e. water with a low UV transmittance as it is characteristic for water in wastewater treatment plants. This is because the molar absorption coefficient of O₃ is much higher than that of H₂O₂ so that the radical formation rate is at least as high or even higher for the same UV radiation intensity while the energy consumption may be reduced. The proportion of the primary and the secondary reactions can be adjusted such that the risk of bromate formation is significantly reduced, even though O₃ is used in the water treatment, since the hydraulic retention time of O₃ in the water can be minimized, e.g., if UV irradiation is started immediately after or even during the introduction of O₃, while pollutants and/or organic substances are still sufficiently degraded. In addition, the process allows to optimize energy consumption if the intensity of the UV radiation is low at the start of the process, which leads to a higher proportion of H₂O₂/O₃-reactions in the secondary reactions. In contrast to a pure H₂O₂/O₃ process, the process according to the invention also provides disinfection by the UV irradiation of the water to be treated.

Moreover, elevated O₃ concentrations in the treated water must be avoided, as they can be harmful to humans, the environment and other water processing systems. Therefore, the amount of O₃ used for the water treatment and/or the at least one irradiation-related parameter of the UV irradiation are adjusted such that the treated water contains O₃ dissolved in the water in a maximum amount of ≤ 0.1 mg/l, preferably 0.05 mg/l, at the outlet of the treatment system.

In one embodiment of the invention, at least one first water-related parameter of the water to be treated is determined. Preferably, the first water-related parameter is determined prior to the O₃ introduction into the water to be treated and wherein the amount of O₃ used for the water treatment and the at least one irradiation-related parameter are adjusted in dependence of the at least one first water-related parameter. The first water parameter is either one or a combination of parameters selected from the group comprising:
- pH value
- temperature
- oxidation-reduction potential
- dissolved or total organic carbon
- spectral absorptivity at one or more wavelengths
- turbidity
- bromide concentration
- nitrite concentration
- fluorescent dissolved organic matter
- a target or indicator compound to be removed.

Only one single parameter or a combination of parameters may be selected. In a preferred embodiment, at least the first parameters pH value and/or temperature are selected. The selection of the pH value may be advantageous as the number of radicals formed from O₃ as well as the reaction speed of H₂O₂/O₃ depend on the pH value of the water. When the pH value increases, radical formation increases and, depending on the value, may even increase significantly. When the pH value decreases, radical formation decreases and, depending on the value, may even decrease significantly. Thus, water with a lower pH value may require the application of a higher dose of UV irradiation than water with a higher pH value. The selection of the water temperature may be advantageous because the temperature may influence the stability of O₃ and thus the number of radicals formed from O₃ as well as the solubility of O₃ in the water to be treated. Also, the water temperature may have influence on the reaction speed of H₂O₂/O₃. Thus, water at a higher temperature may require a lower amount of O₃ and/or a lower dose of UV irradiation and, vice versa, water at a lower temperature may require a higher amount of O₃ and/or a higher dose of UV irradiation. The selection of the oxidation-reduction potential (ORP) may be advantageous as this parameter indicates the pollution and the oxidative potential of the water to be treated. A high ORP value may indicate a high oxidative potential, e.g. due to the presence of more oxidation agents and/or less organic matter in the water. A low ORP value may indicate a low oxidative potential, e.g. due to the presence of less oxidation agents and/or more organic matter. Therefore, water with a higher ORP value may require the addition of less O₃ and/or a lower dose of UV irradiation than water with a lower ORP value. The selection of the dissolved or total organic carbon concentration and/or the spectral absorptivity at one or more wavelengths as at least one first parameter may be advantageous as these parameters may indicate the quantity of pollutants and/or organic substances present in the water to be treated and therefore the efficiency of UV irradiation as well as they may be indicative how much O₃ may be directly scavenged by the pollutants and/or organic substances. In general, the higher the concentration of pollutants and/or organic matter in the water, the higher the amount of O₃ that may be needed for the water treatment and/or the dose of UV irradiation, and vice versa for a lower concentration of pollutants and/or organic matter. The spectral absorptivity may preferably be measured at the wavelength or the wavelengths at which the UV irradiation is conducted in the process according to the invention and may give an indication whether the at least one irradiation-related parameter of the UV irradiation shall be adjusted. The selection of turbidity as parameter may be advantageous as this parameter also may be indicative of the quantity of pollutants and/or organic matter present in the water to be treated and therefore of the UV transmissibility of the water. The higher the turbidity of the water to be treated, the higher the amount of O₃ and/or the higher the dose of UV irradiation required for the water treatment may be, and vice versa for lower turbidity. The selection of the bromide concentration in the water to be treated as at least one first parameter may be advantageous as it may be indicative the risk of a harmful amount of bromate being formed during the process. If the bromide concentration is high, the amount of O₃ used for the water treatment and/or the hydraulic retention time of the O₃ in the water to be treated may be reduced before starting the UV irradiation and/or the applied dose of UV irradiation may be increased and vice versa for low bromide concentrations. The selection of the nitrite concentration as parameter may be advantageous because a higher nitrite concentration may be indicative for a higher O₃ demand. The selection of fluorescent dissolved organic matter as parameter may be advantageous as this parameter may indicate the level of pollutants and/or organic substances present in the water to be treated. A higher fluorescent dissolved organic matter value may indicate a higher level of pollutants and/or organic substances present in the water to be treated, and vice versa for a lower fluorescent dissolved organic matter value. The first water-related parameter could also be a target or indicator compound which is contained in the water to be treated and which should be mandatorily removed to a specific degree.

In another preferred embodiment of the invention, at least one second water-related parameter of the treated water is determined. Preferably, the second water-related parameter is determined after the UV irradiation and wherein the amount of O₃ used for the water treatment and the at least one irradiation-related parameter are adjusted in dependence of the at least one second water-related parameter. The second water-related parameter is at least one parameter selected from the group comprising of:
- pH value
- bromate concentration
- oxidation-reduction potential
- spectral absorptivity at one or more wavelengths
- fluorescent dissolved organic matter
- amount of O₃
- amount of H₂O₂
- a target or indicator compound to be removed.

Only one single parameter or a combination of parameters may be selected. In a preferred embodiment, at least the parameter pH value is selected. The selection of the pH value may be advantageous as the number of radicals formed from O₃ as well as the reaction speed of H₂O₂/O₃ depend on the pH value of the water. When the pH value increases, radical formation increases and, depending on the value, may even increase significantly. When the pH value decreases, radical formation decreases and, depending on the value, may even decrease significantly. Thus, water with a lower pH value may require the application of a higher dose of UV irradiation than water with a higher pH value. In combination with the pH value determined as a first water-related parameter, the stability of pH can be ensured. The selection of the bromate concentration of the treated water as at least one second parameter may be advantageous as the proportion of primary and secondary reactions may be adjusted so that the bromate concentration remains at a harmless level. The selection of oxidation-reduction potential, spectral absorptivity at one or more wavelengths and/or fluorescent dissolved organic matter may be advantageous because a comparison of these values with the values of the corresponding parameters of the water to be treated prior to the O₃ introduction allows conclusions to be drawn about the degradation of pollutants and/or organic substances. Also, the oxidation-reduction potential may be indicative for the dissolved H₂O₂ and/or O₃ concentration in the treated water. It may also be advantageous to determine the concentration of dissolved O₃ directly. Preferably, the spectral absorptivity is measured at the wavelength or the wavelengths at which the UV irradiation is conducted in the process according to the invention. The determination of the amount of H₂O₂ as a second water-related parameter may be advantageous because it may give an indication about the proportion of primary and secondary reactions in the process. Further, if the amount of H₂O₂ is high, it may trigger the addition of a certain amount of O₃ even after UV irradiation. The second water-related parameter could also be a target or indicator compound which is contained in the water to be treated and which should be mandatorily removed to a specific degree.

In one embodiment, at least one of the at least one first water-related parameter and/or the at least one second water-related parameter is determined by online measurement. Online measurement means that the measurement is carried out directly within the process chain and the treatment system, sometimes also referred to as inline measurement, or in a bypass of the treatment system, without removing the water from the process or system, whereby the parameter is preferably measured in real time during the process. Online measurement is to be distinguished from atline or offline measurement. In atline measurement or offline measurement, the water is removed from the treatment process and the treatment system, taken to an analyzer outside the treatment system and analyzed remotely. However, the distinction between atline measurement and offline measurement is not clearly defined, but in the case of offline measurement it is generally assumed that the analysis can be carried out at a greater spatial distance to the treatment system than in the case of atline measurement. In the process according to the invention, several of the at least one first parameter and/or the at least one second parameter may be measured online. However, it is not mandatory to measure all parameters online. For example, it may be technically or economically advantageous to measure at least one or more parameters atline or offline. It may also be technically impossible to measure one of the first and/or second parameters online. For instance, the online measurement of the bromate concentration is currently not technically possible. Preferably, the online measurement is conducted by using at least one sensor. A parameter can be measured using one single sensor or at least two or more sensors, for example to improve the measurement accuracy, to ensure a correct measurement in terms of a redundant system or simply because the measurement of a parameter requires more than one sensor. In particular, the at least one sensor for measuring the at least one first water-related parameter is arranged in the process chain and thus in the treatment system upstream of the introduction of the O₃ or upstream of means for introducing the O₃ into the water to be treated. In particular, the at least one sensor for measuring the at least one second water-related parameter is arranged in the process chain and thus in the treatment system downstream of the UV irradiation and the reaction chamber, preferably after all significant reactions have taken place, or downstream of the UV irradiation and within the reaction chamber, preferably after all significant reactions have taken place. Sensors known to the skilled person from the state of the art can be used in a known manner to measure the parameters.

It is, however, worth noting that the process according to the invention may also be run without the determination of one or more first and/or second water parameters by just ensuring that the mass ratio of the H₂O₂ amount dissolved in the water at the outlet of the treatment system to the introduced O₃ remains in the specified range.

In yet another embodiment of the invention, the at least one irradiation-related parameter is at least one parameter selected from the group comprising:
- UV irradiation intensity
- UV irradiation duration
- hydraulic retention time (HRT) between the introduction of the ozone and the UV radiation
- HRT between the last UV irradiation and the outlet of the treatment system
- number of UV irradiation incidents
- in case of more than one irradiation incident: HRT between subsequent irradiation incidents.

Only one single parameter or a combination of parameters may be selected. In a preferred embodiment, at least the parameters UV irradiation intensity and UV irradiation duration are selected. The selection of the UV irradiation intensity and/or the UV irradiation duration parameter may be advantageous as the dose of UV irradiation may be adjusted e.g. depending on the quantity of pollutants in the water to be treated, the bromide concentration and the amount of O₃ to be photolyzed and/or to increase the energy efficiency of the treatment process. The selection of the HRT between the introduction of the O₃ and the UV irradiation as at least one irradiation-related parameter may be advantageous as bromate is increasingly formed in water containing bromide with increasing dwell time of O₃ in the water to be treated. Therefore, the dwell time should be as short as possible or even zero in the case of water with a high bromide concentration and could be higher in the case of water with a lower bromide concentration. The selection of HRT between the last UV irradiation and the outlet of the treatment system as at least one irradiation-related parameter may be advantageous to take advantage of post-reactions in the treated water, in particular post-reactions of O₃ and H₂O₂, e.g. in a post-reaction chamber and/or after degassing the treated water in a degassing zone. The higher the HRT, the more time is available for post-reactions and the more post-reactions may take place, and vice versa for a lower HRT. However, the number of post-reactions may also depend on other factors, such as the amount of O₃ and/or H₂O₂ in the treated water. The selection of the number of UV irradiation incidents as at least one irradiation-related parameter may be advantageous as it may be preferable to irradiate the water to be treated more than once and at different times during the treatment process. For example, it may be advantageous to irradiate the water to be treated at a short HRT after O₃ introduction in a first incident, preferably with a low UV irradiation intensity and/or duration, resulting in a higher share of O₃/H₂O₂ reactions and thus energy savings. After the first incident the water may be irradiated again in a second incident, resulting in a higher degradation rate of pollutants in the water and a higher level of disinfection. It is also possible to conduct more than two separate UV irradiations. In the case of more than one irradiation incident, it may be advantageous to select the HRT between subsequent irradiation incidents as at least one irradiation-related parameter to control the reactions, e.g. the reactions of O₃ and H₂O₂ or O₃ and bromide, between irradiation incidents.

O₃ can be introduced into the water upstream of the reaction chamber and/or directly inside the reaction chamber. In either case, it is preferred that the introduction is arranged such that the HRT between O₃ introduction and the start of UV irradiation is minimized to prevent excessive bromate formation when the bromide concentration in the water to be treated is high. In one embodiment, at least a part of the O₃ is introduced into the water directly inside the reaction chamber. By introducing the O₃ directly inside the reaction chamber, the length of the flow path of the water up to the UV irradiation and the associated HRT can be advantageously minimized or eliminated. While some part of O₃ is introduced inside the reaction chamber, another part may be introduced upstream or even downstream of the reaction chamber. However, introducing O₃ directly inside the reaction chamber means that the dwell time of O₃ in the water prior to the start of UV irradiation can be adapted over a range, starting from zero. The process according to the invention allows the dwell time to be adjusted according to the concentration of bromide in the water to prevent the formation of harmful amounts of bromate. Preferably, O₃ is introduced inside the reaction chamber within an area in which the UV irradiation can be applied. This does not necessarily mean that the UV irradiation also must start immediately with the introduction of O₃. However, it is preferred that the UV irradiation is conducted at the same time as O₃ is introduced into the water, with the radiation affecting the area where O₃ is introduced. In this case, O₃ dwell time is zero. In one embodiment, UV irradiation is conducted when O₃ is not yet completely dissolved or not yet dissolved to a significant extent in the water, i.e. when it is predominantly present in the water as gas bubbles. In this way, O₃ may be irradiated at the phase boundary between a gas bubble and the water, which can be advantageous as it has been found that irradiation of the phase boundary can lead to the formation of radicals with a higher quantum yield.

In one embodiment, the UV irradiation is conducted using at least one UV-light source. In particular, several UV-light sources may be used in the process of the invention. In one embodiment, the at least one light source comprises one or more mercury-vapor lamps, preferably low pressure and/or medium pressure mercury-vapor lamps. It is preferred that the at least one light source comprises one or more LEDs. In contrast to mercury-vapor lamps, which can generally only emit certain wavelengths such as 184 nm or 254 nm, LEDs can be designed to emit a variety of different wavelengths, which is advantageous for the process according to the invention in terms of effective pollutant degradation. However, it is also conceivable to use a mix of LEDs and mercury-vapor lamps as UV-light sources. If the at least one UV-light source comprises more than one LEDs and/or mercury-vapor lamps, the LEDs and/or the mercury-vapor lamps are preferably arranged adjacent to one another to form a coherent UV-light source.

Preferably, the UV irradiation is conducted using radiation with a wavelength of 220 to 320 nm, preferably 250 to 290 nm.

The water may e.g. be treated in a batch process or a continuous process. In a batch process, a specific quantity of water is introduced into the reaction chamber and at least UV radiation and optionally some additional process steps, such as O₃ introduction, are conducted for this water quantity in the reaction chamber. In a continuous process, the reaction chamber comprises an inlet and an outlet, wherein the water continuously flows through the reaction chamber from the inlet to the outlet. The continuous process generally allows higher water throughput, which is preferred. Irrespective of the process being a batch process or a continuous process, it is also conceivable that more than one reaction chamber is used in the process according to the invention.

In one embodiment of the invention, which is particularly preferred for a continuous process, at least two UV-light sources are used. The UV-light sources are arranged one behind the other in a flow direction of the water from the inlet to the outlet in the reaction chamber. The UV-light sources can be arranged directly adjacent to each other or at a distance from each other in the direction of the water flow. It is preferred that the UV-light sources are controlled and activated independently of each other, i.e. they can emit UV radiation with a different intensity and/or a different duration and with a different HRT after O₃ introduction. Therefore, the water to be treated can be irradiated by activating at least one UV-light source, several UV-light sources or all UV-light sources, particularly depending on the water quality and the irradiation-related parameter. This embodiment advantageously allows to conduct the UV irradiation at different points of the water flow, so that the introduced O₃ can be UV irradiated at different times, particularly at different dwell times of the O₃, after introduction and/or with different UV intensities. This embodiment also allows more than one UV irradiation incident to be conducted, wherein a first UV irradiation incident may be conducted using a first UV-light source and a second UV irradiation incident may be conducted using a second UV-light source. By adjusting the positions of the UV-light sources relative to the water flow and/or by adjusting the activation time of the UV-light sources, the HRT between subsequent irradiation incidents may be adjusted, including an HRT of zero. In another embodiment, in which the water is treated in batches, multiple UV irradiation incidents can be conducted by activating the UV-light source(s) and deactivating it/them after a certain duration to complete one incident and then reactivating it/them to start the next incident. Between two incidents, the UV-light sources may remain deactivated for a specific period to adjust the HRT between the irradiation incidents. In addition, the intensity and/or the duration of the UV irradiation may be set individually for each irradiation incident.

In one embodiment, O₃ is introduced into the water with microbubbles and/or nanobubbles. Preferably, in the case of microbubbles, the bubbles have a volume equivalent diameter according to ISO 20480-1:2017 of not more than 50 µm, preferably not more than 20 µm. Preferably, in the case of nanobubbles, the bubbles have a volume equivalent diameter of not more than 1000 nm, preferably not more than 500 nm or not more than 320 nm. It may be particularly advantageous if the volume equivalent diameter of the nanobubbles is in the range of the wavelength used for the UV irradiation. Preferably, the microbubbles and/or nanobubbles are introduced such that they are homogeneously distributed in the water to be treated. The introduction of O₃ by way of microbubbles and/or nanobubbles has several advantages. Smaller bubbles provide a greater surface area than larger bubbles, which means that the total surface area of smaller bubbles is greater for the same amount of O₃ compared to bigger bubbles. This results in a higher dissolution rate. A higher dissolution rate increases the rate at which pollutants and/or organic substances are degraded, thereby increasing the overall effectiveness of the pollutant degradation of the process according to the invention. Additionally, a greater surface area can be irradiated to take greater advantage of the effects of irradiating the phase boundary of the O₃ bubbles and the water. Nanobubbles have the further advantage of being more stable and having a higher zeta potential, so that they do not coalesce as quickly as microbubbles or even bigger bubbles, and they do not rise as quickly to the surface due to the lower buoyancy compared to larger bubbles. Also, nanobubbles generally have a higher internal pressure, which may lead to a more efficient dissolution of the O₃ into the water. Preferably, the size of the microbubbles and/or nanobubbles is controlled by the process according to the invention.

O₃ may be introduced into the water in gaseous form either as such or in a mixture of e.g. O₃ and air or O₃ and O₂. However, it is also possible to first add O₃ to pre-water and subsequently mix the ozonated pre-water with the water to be treated.

O₃ may be introduced into the water e.g. by means of a diffusor, venturi injector, membrane (porous or non-porous), static mixer, microbubble generator or nanobubble generator. The use of a diffusor and/or a (non-) porous membrane may be advantageous if the O₃ is introduced into the water directly inside the reaction chamber. The use of a venturi injector, static mixer, microbubble generator and/or nanobubble generator may be advantageous if O₃ is introduced into the water upstream of the reaction chamber. The means for introducing O₃ may be used as alternatives or in combination. The choice of suitable means for introducing O₃ depends, among other things, on the desired size of the gas bubbles.

It is preferred, but not mandatory, if the H₂O₂ used in the process according to the invention is only formed within the water to be treated during the water treatment process and not purposively added as such to the treatment process or to the water, respectively. In a preferred embodiment, only O₃ is introduced into the water to be treated, possibly together with substances as part of the introduction, e.g. when O₃ is introduced as part of an O₃ mixture. However, there may be instances where the purposeful addition of H₂O₂ may still be beneficial.

In one embodiment, the process according to the invention further comprises a degassing step after the UV irradiation. The degassing may be conducted to remove any gas, in particular remaining gaseous O₃, from the treated water using a conventional degasser, preferably in a degassing zone. The gas which is removed from the treated water in the degassing step leaving the degasser is referred to as off-gas. In addition to O₃, the off-gas can contain further gases, for example gases that have been introduced into the water alongside with O₃, such as O₂ or air. The off-gas can also contain CO₂ if any carbon has reacted with O₃ during the treatment process. Preferably, the concentration of O₃ is measured in the off-gas leaving the degasser. Knowing the O₃ concentration in the off-gas can be advantageous as it is necessary to ensure that the O₃ in the off-gas is destroyed so that it is not emitted into the environment. Preferably, the O₃ concentration in the off-gas may be used as a parameter for the adjustment of the introduction of O₃ into the water to be treated.

In one embodiment, the process according to the invention comprises a post-reaction step which extends the HRT of the treated water under UV irradiation such that at least 50 %, preferably at least 60 %, preferably at least 70 % of the possible reactions of the remaining O₃ with the remaining H₂O₂ in the treated water take place. Preferably, the post-reaction step is conducted in a post-reaction chamber. If the process according to the invention comprises a degassing step, the post-reaction step may be conducted before or after the degassing step.

The process according to the invention not only allows a highly efficient treatment of water with low UVT and higher bromide concentrations, but also allows short processing times. It is preferred that the total HRT of the water to be treated in the treatment system does not exceed 30 minutes, preferably not more than 10 minutes. The most preferred processing time is up to 5 minutes. The short duration of the process can inter alia be achieved when using a reaction chamber having at least a first UV light source at the inlet side of the reaction chamber and a second UV light source at the outlet side of the reaction chamber and means for introducing gaseous O₃ in proximity to or at the first UV light source.

The use of the process according to the invention is particularly advantageous for the treatment of wastewater having an UVT of less than 90% and/or a bromide concentration of >0.1 mg/l.

In the following, the invention is explained in more detail with reference to figures in which preferred embodiments of the invention are shown.
- Fig. 1: shows a simplified and schematic process diagram of the process according to the invention in a first embodiment;
- Fig. 2: shows a simplified and schematic process diagram of the process according to the invention in a second embodiment;
- Fig. 3: shows the logarithmic reduction value of O₃ degradation in a prototype treatment system;
- Fig. 4: shows the ratio of photolytically formed H₂O₂ over degraded O₃;
- Fig. 5: shows the ratio of formed H₂O₂ over introduced O₃;
- Fig. 6: shows the results of different AOPs according to the invention and AOPs for comparison purposes.

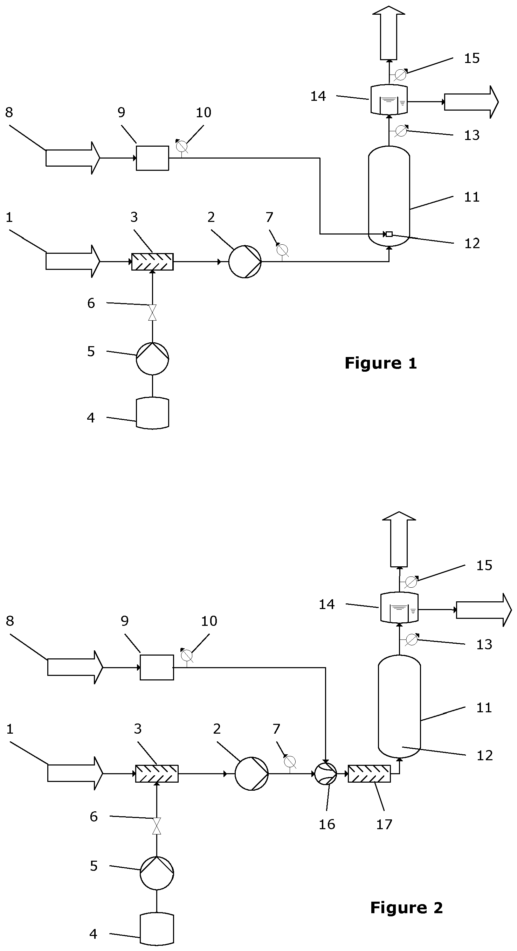

Figure 1 shows a simplified and schematic process diagram of the process according to the invention in a first embodiment. In a first process step, the water 1 to be treated, e.g. wastewater, is withdrawn from a source of water with a pump 2. A static mixer 3 for the addition of additional substances or chemicals, such as H₂O₂, if so required, is arranged upstream of the pump 2 but can as well be arranged downstream of the pump 2. The additional substances or chemicals can be stored in a tank 4 and pumped into the static mixer 3 with a pump 5. A valve 6 is used to ensure a uniform flow rate of the chemicals to the static mixer 3. Several first sensors 7 are arranged downstream of the pump 2, which are used to analyze the water 1 to be treated. The first sensors 7 are used to determine several first water-related parameters such as pH value, temperature, oxidation-reduction potential, dissolved organic carbon, spectral absorption at one or more wavelengths, turbidity, bromide concentration, nitrite concentration or fluorescent dissolved organic matter.

To introduce O₃ into the water 1 to be treated, a feed gas supply 8, in this embodiment oxygen, is first fed to an O₃ generator 9 which produces O₃ in a known manner. Subsequently, O₃ concentration and quantity is monitored and controlled with a measurement device 10. In the first embodiment of the process according to the invention, O₃ is introduced into the water directly inside a reaction chamber 11 with a diffusor 12 capable of introducing O₃ with bubbles. The ozonated water flows continuously through the reaction chamber 11 from an inlet to an outlet. The water flow is exposed to UV radiation emitted by UV-light sources comprising LEDs, which are not shown in the process diagram. The introduced O₃ as well as the formation of hydroxyl radicals and H₂O₂ due to photolysis of the introduced O₃ lead to the degradation of pollutants and/or organic substances in the water.

After UV irradiation and downstream of the reaction chamber 11, several second sensors 13 are arranged to analyze the treated water 1. The second sensors 13 are used to determine several second water-related parameters such as pH value, bromate concentration, oxidation-reduction potential, spectral absorption at one or more wavelengths, fluorescent dissolved organic matter, H₂O₂, O₃. Downstream of the second sensors 13, a degassing column 14 is arranged to remove any gas, e.g. O₃, in the treated water 1. The off-gas from the degassing column 14 is analyzed for its O₃ concentration using an O₃ sensor 15. Subsequently, the O₃ in the off-gas is destroyed in a process step not shown in the process diagram to avoid any harm to the environment. The water 1 treated with the process according to the invention can be reintroduced into the water cycle after the process has been completed.

Figure 2 shows a simplified and schematic process diagram of the process according to the invention in a second embodiment. In contrast to the first embodiment, in the second embodiment O₃ is not introduced into the water 1 directly inside the reaction chamber 11 but in the immediate vicinity upstream of it. For this purpose, a venturi injector 16 is used, which is arranged upstream of the reaction chamber 11. Downstream of the venturi injector 16 and upstream of the reaction chamber 11, a static mixer 17 is arranged to reduce the size of the O₃ gas bubbles and to distribute the introduced O₃ homogeneously in the water to increase the mass transfer ratio of O₃ into the water. However, the use of the static mixer 17 is optional. From the static mixer 17, the water 1 flows into the reaction chamber 11.

In the following, an example of the treatment of water with the process according to the invention is described.

The water of the example was treated using a process according to the second embodiment, shown in the process diagram in Figure 2, using a prototype treatment system. The reaction chamber used in the process was equipped with 16 LED arrays having a UV irradiation power of 2.5 W each, each with a peak wavelength between 260 and 280 nm. The LED arrays were arranged in a distance to each other in relation to the water flow and could be individually controlled, i.e. activated and deactivated. The water to be treated flowed through the reaction chamber at a rate of 1 m³/h. O₃ was introduced into the water in immediate vicinity upstream of the reaction chamber using a venturi injector. The O₃ for use in the process was generated using a Wedeco Modular 8 HC ozone generation system from the company Xylem Inc. The O₃ concentration in the water was measured using the indigo method.

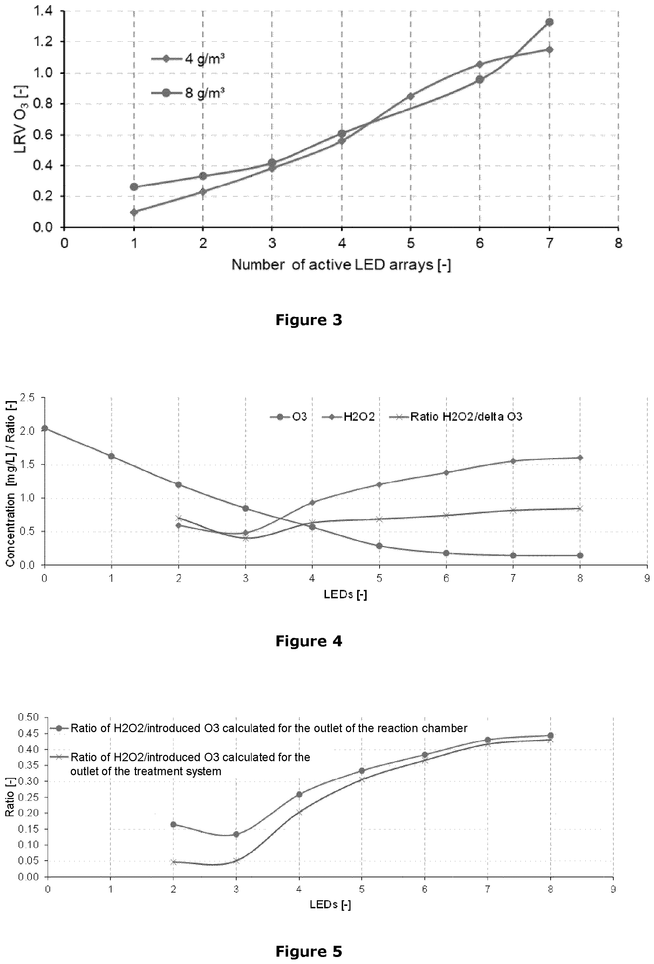

First, the general capability of the reaction chamber and the UV irradiation was tested using tap water. The tap water had a pH value of 7.4 to 7.7. O₃ was introduced into the water in an amount of 4 mg/l and 8 mg/l in gaseous form. The logarithmic reduction value (LRV) of the O₃ degradation is shown in Figure 3 for different numbers of activated LED arrays, in particular for one to seven activated arrays. The concentration of dissolved O₃ in the water was measured directly downstream of the outlet of the reaction chamber. It can be seen in Figure 3 that the LRV O₃ increases as the number of activated LED arrays increases. Therefore, for both O₃ concentrations, the LRV O₃ was lowest for one activated LED array and highest for seven activated LED arrays.

The amount of H₂O₂ formed due to the UV irradiation of O₃ in the reaction chamber was tested using tap water as well. The water had a pH value of 7.4. O₃ was introduced in gaseous form in an amount of 3.6 mg/l. The concentration of dissolved O₃ in the water before UV irradiation was measured directly upstream of the inlet of the reaction chamber. The O₃ concentration at the inlet of the reaction chamber is the O₃ concentration for zero activated LED arrays. The O₃ concentration at the inlet is approximately 2 mg/l since some of the introduced O₃ reacts with the water immediately after introduction. The concentration of the dissolved O₃ and the dissolved H₂O₂ after the UV irradiation was measured directly downstream of the outlet of the reaction chamber. The measurement results were used to calculate the ratio of the photolytically formed H₂O₂ over degraded O₃, as shown in Figure 4. The figure also shows the absolute concentration of dissolved O₃ and H₂O₂ in the water. It can be seen from Figure 4 that the absolute concentration of dissolved H₂O₂ and the ratio of formed H₂O₂ over degraded O₃ generally increase as the number of activated LED arrays increases, whereas the absolute O₃ concentration decreases. The low O₃ concentration for higher numbers of activated LED arrays, e.g. seven or eight, could actually be zero and could be caused by measurement inaccuracies or O₃ still being present as gas bubbles. The average ratio of formed H₂O₂ over degraded O₃ was 0.69.

Figure 5 shows the ratio of formed H₂O₂ over introduced O₃ (here O₃ in gaseous form with 3.6 mg/l), whereas the ratio had been calculated for the outlet of the reaction chamber and for the outlet of the treatment system. The ratio for the outlet of the treatment system is important because the remaining O₃ reacts with H₂O₂ after UV irradiation as part of the secondary reactions, leading to further degradation of pollutants. It has been found by Merényi et al., 2010 and disclosed in "Reaction of ozone with hydrogen peroxide (peroxone process): A revision of current mechanistic concepts based on thermokinetic and quantum-chemical considerations" that a molar ratio of 0.5 molecules H₂O₂ per mole O₃ is used in the reaction of O₃ with H₂O₂, which was used as the basis for calculating the ratio of formed H₂O₂ over introduced O₃ for the outlet of the treatment system, based on the O₃ and H₂O₂ amounts measured at the outlet of the reaction chamber. It can be seen from the figure that the ratio of formed H₂O₂ over introduced O₃ generally increases as the number of activated LED arrays increases. The increase in ratio correlates with an increased proportion of primary reactions, in particular the generation of OH radicals and H₂O₂ by UV irradiation of O₃. The gap between the ratio calculated for the outlet of the reaction chamber and for the outlet of the treatment system is relatively high for a low number of activated LED arrays and decreases as the number of activated LED arrays increases. Thus, as the number of activated LED arrays increases, the share of photolytically degraded O₃ increases and the proportion of the reactions of O₃ with H₂O₂ within the secondary reactions decreases. In the case of two activated LEDs, 1.6 mg/l O₃ was degraded immediately after the introduction into the water due to the general O₃ demand of the water. 0.8 mg/l were photolytically degraded due to UV irradiation and led to the formation of hydroxyl radicals and H₂O₂. The remaining 1.2 mg/l was used for the reaction with formed H₂O₂. In the case of eight activated LEDs, 1.6 mg/l O₃ was degraded immediately after the introduction into the water, while the remaining O₃ was mainly photolytically degraded.

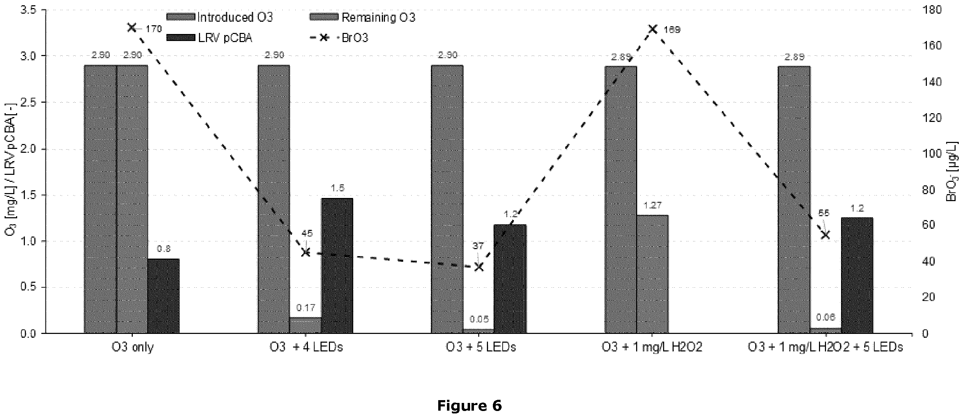

In addition, the process was tested using artificially polluted water. For this purpose, 0.88 mg/l Br⁻ and 0.15 mM tert-butyl were added to deionized water. Para-chlorobenzoic acid (pCBA) at a concentration of about 50 µg/l was added as probe compound to evaluate the efficiency of the water treatment. The pH value of the water was 8.0 to 8.1. The UV transmittance at 270 nm was about 95 % and the water temperature was 11.7 °C. For the treatment, 4 mg/l of gaseous O₃ was introduced into the water. For evaluation purposes, water samples were taken directly after the reaction chamber, whereas thiosulfate was added after 15 min to stop any post-reactions. The test results are shown in Table 1 and Figure 6. The O₃ concentration was measured directly before the inlet (applied O₃) and directly after the outlet (remaining O₃) of the reaction chamber. Therefore, when the O₃ was measured before the reaction chamber, some of the O₃ had already reacted due to the instantaneous O₃ demand of the water. As O₃ concentrations were measured shortly before and after the UV reactor, the concentration labeled as "applied" in Table 1 (or labelled "introduced O₃" in Figure 6) is the concentration after instantaneous O₃ demand and should not be used to calculate the ratio H₂O₂ over introduced O₃ as defined in claim 1. For this calculation, the amount of introduced O₃ of 4 mg/l as mentioned above shall be used. The O₃ concentration in the effluent, i.e. at the end of the process, will be lower than the "remaining O₃" measured directly after the outlet of the reaction chamber, due to post reactions.

As a comparative test, only O₃ was introduced into the water and no UV irradiation was conducted. As can be seen from Figure 6, the LRV pCBA was 0.8 at the end of this comparative test. The value of the O₃ concentration after the UV reactor (Os remaining) of 2.90 was in fact not measured but was estimated in view of other measured data. As O₃ was not reduced by UV irradiation, the amount of bromate formed is relatively high. In a test of the process according to the invention, UV irradiation using four LED arrays was conducted in addition to O₃ introduction. This resulted in an increase of the LRV pCBA to 1.5. When one further LED array was activated, i.e. five LED arrays in total, the LRV pCBA decreased to 1.2. This is believed to be due to a higher proportion of O₃ being photolytically degraded and the proportion of secondary reactions decreasing. At the same time, however, the bromate formed decreased from 45 µg/l to 37 µg/l and was thus significantly lower in both cases than when only O₃ was used.

According to the measurement of dissolved O₃ in the water, 1.1 mg/l of O₃ was degraded in these tests due to the immediate O₃ demand of the water (subtracting 2.9 mg/l dissolved O₃ from 4 mg/l O₃ supplied as gaseous O₃). Based on the amount of photolytically degraded O₃ in the UV reactor and the average measured ratios of formed H₂O₂ to degraded O₃ (figure 4), with four activated LED arrays, 1.88 mg/l H₂O₂ was formed by UV irradiation of O₃. This concentration was then reduced to 1.82 mg/l H₂O₂ by post-reactions with the remaining O₃ after the UV reactor. This resulted in a ratio of formed H₂O₂ over introduced O₃ for the outlet of the treatment system of 0.46. When five LED arrays were activated, the ratio increased to 0.49.

Another comparative test was conducted where O₃ and H₂O₂ were introduced into the water, but no UV irradiation was conducted. H₂O₂ was introduced in an amount of 1 mg/l. The measured introduced O₃ was 2.89 mg/l. Figure 6 shows that pCBA was significantly reduced to below the limits of detection, corresponding to a LRV pCBA of > 2.5. However, a bromate formation of 169 µg/l was nearly as high as when only O₃ was used. There was still a relatively high concentration of dissolved O₃ in this test. Therefore, additional time would be required to finish the reactions, which would disadvantageously result into higher space requirements of the treatment system.

In another test of the process according to the invention, UV irradiation was conducted in addition to the introduction of O₃ and H₂O₂. In this test, the O₃ degraded to a concentration of 0.06 mg/l, whereas bromate was formed in an amount of 55 µg/l. However, LRV pCBA was decreased as well. While the O₃ and the bromate concentrations were lower than those of both comparative tests, they were slightly higher than those of the test with O₃ introduction and five activated LED arrays. The comparison of the bromate formation per LRV pCBA gave a value of 213 µg/l/LRV for O₃ only, of 30 µg/l/LRV for O₃ and four activated LED arrays, of 31 µg/l/LRV for O₃ and five activated LED arrays, 68 µg/l/LRV for O₃ and H₂O₂ only, assuming an LRV pCBA of 2.5 and to 46 µg/l/LRV for O₃ and H₂O₂ and five activated LED arrays.

**Table 1**

| **Test** | **Applied O₃ [mg/l]** | **Remaining O₃ [mg/l]** | **LRV pCBA** | **Bromate concentration [µg/l]** | **Bromate concentration/ LRV pCBA** |
|---|---|---|---|---|---|
| O₃ only | 2.90 | 2.90 | 0.8 | 170 | 213 |
| O₃ and 4 LED arrays | 2.90 | 0.17 | 1.5 | 45 | 30 |
| O₃ and 5 LED arrays | 2.90 | 0.05 | 1.2 | 37 | 31 |
| O₃ and H₂O₂ | 2.89 | 1.27 | > 2.5 | 169 | 68 |
| O₃ and H₂O₂ and 5 LED arrays | 2.89 | 0.06 | 1.2 | 55 | 46 |

## Claims

1. A process for the treatment of water, in particular of wastewater, in a treatment system having an inlet for water to be treated, a reaction chamber and an outlet for treated water, comprising the introduction of ozone into the water to be treated and the UV irradiation of the ozonated water, wherein the UV irradiation takes place in the reaction chamber, wherein hydrogen peroxide is produced by the UV irradiation of the ozonated water in the reaction chamber and wherein the amount of ozone used for the water treatment and/or at least one irradiation-related parameter of the UV irradiation are adjusted such that the treated water after the UV irradiation at the outlet of the treatment system contains
i) hydrogen peroxide dissolved in the water in a mass ratio of hydrogen peroxide to introduced ozone in a range from 0.01 to 1.0, preferably in a range from 0.01 to 0.5, and
ii) ozone dissolved in the water in a maximum amount of ≤ 0.1 mg/l.

2. The process according to claim 1, wherein at least one first water-related parameter of the water to be treated is determined prior to the ozone introduction and the amount of ozone used for the water treatment and the at least one irradiation-related parameter are adjusted in dependence of the at least one first water-related parameter, wherein the first water-related parameter is at least one parameter selected from the group comprising:
- pH value
- temperature
- oxidation-reduction potential
- dissolved or total organic carbon concentration
- spectral absorptivity at one or more wavelengths
- turbidity
- bromide concentration
- nitrite concentration,
- fluorescent dissolved organic matter
- a target or indicator compound to be removed.

3. The process according to claim 1 or 2, wherein at least one second water-related parameter of the treated water is determined after the UV irradiation and the amount of ozone used for the water treatment and the at least one irradiation-related parameter are adjusted in dependence of the at least one second water-related parameter, wherein the second water-related parameter is at least one parameter selected from the group comprising:
- pH value
- bromate concentration
- oxidation-reduction potential
- spectral absorptivity at one or more wavelengths
- fluorescent dissolved organic matter
- amount of O₃
- amount of H₂O₂
- a target or indicator compound to be removed.

4. The process according to claim 2 or 3, wherein at least one of the first water-related parameter and/or the second water-related parameter is determined by online measurement, wherein the online measurement is conducted in particular by using at least one sensor.

5. The process according to any one of the preceding claims, wherein the at least one irradiation-related parameter is at least one parameter selected from the group comprising:
- UV irradiation intensity
- UV irradiation duration
- hydraulic retention time between the introduction of the ozone and the UV irradiation
- HRT between the last UV irradiation and the outlet of the treatment system
- number of UV irradiation incidents
- in case of more than one irradiation incident: HRT between subsequent irradiation incidents.

6. The process according to any one of the preceding claims, wherein at least a part of the ozone is introduced into the water inside the reaction chamber, in particular within an area in which the UV irradiation is conducted at the same time.

7. The process according to any one of the preceding claims, wherein the UV irradiation is conducted using at least one UV-light source, wherein the at least one UV-light source comprises one or more LEDs and/or mercury-vapor lamps, in particular low pressure and/or medium pressure mercury-vapor lamps.

8. The process according to any one of the preceding claims, wherein the water continuously flows through the reaction chamber from an inlet to an outlet.

9. The process according to claim 7 and 8, wherein at least two UV-light sources are arranged one behind the other in a flow direction of the water flow in the reaction chamber, wherein the water to be treated is treated with UV irradiation by activating at least one, several or all UV-light sources depending on the irradiation-related parameter.

10. The process according to any one of the preceding claims, wherein the UV irradiation has a wavelength of 220 to 320 nm.

11. The process according to any one of the preceding claims, wherein the ozone is introduced into the water by means of a diffusor and/or a venturi injector and/or a membrane.

12. The process according to any one of the preceding claims, wherein the ozone is introduced into the water with microbubbles and/or ultra fine bubbles, wherein the bubbles preferably have a size of not more than 50 µm and even more preferred of not more than 20 µm.

13. The process according to claim 12, wherein the size of the microbubbles is controlled.

14. The process according to any of the preceding claims, wherein the hydrogen peroxide used in the process is only formed within the water during the process and not purposively added as such to the treatment process.

15. The process according to any one of the preceding claims, wherein the treated water is degassed after the UV irradiation using a degasser, and wherein in particular the concentration of ozone is measured in the off-gas leaving the degasser.
